# EUROPEAN PATENT SPECIFICATION

(11) **EP 3 494 707 B1**
(45) Date of publication and mention of the grant of the patent: **01.06.2022**
(21) Application number: 17749650.2
(22) Date of filing: 25.07.2017
(51) Int. Cl.: H04N 21/4623, H04N 21/462, H04N 21/235, H04N 21/418, H04N 21/434, H04N 21/835

(54) **METHOD AND DEVICE FOR CHECKING AUTHENTICITY OF A HBBTV RELATED APPLICATION**
VERFAHREN UND VORRICHTUNG ZUR ÜBERPRÜFUNG DER AUTHENTIZITÄT EINER HBBTV-VERWANDTEN ANWENDUNG
PROCÉDÉ ET DISPOSITIF DESTINÉS À VÉRIFIER L'AUTHENTICITÉ D'UNE APPLICATION CORRESPONDANTE HBBTV

(30) Priority: 04.08.2016 EP 16182822
(43) Date of publication of application: 12.06.2019
(73) Proprietor: SmarDTV S.A., 1033 Cheseaux-sur-Lausanne (CH)
(72) Inventor: DEPREZ, Olivier, 13600 La Ciotat (FR)
(74) Representative: Ipside
(86) International application number: PCT/EP2017/068773
(87) International publication number: WO 2018/024545

(56) References cited:
- EP-A1- 2 797 023
- EP-A2- 1 463 320
- EP-A2- 2 490 454
- WO-A1-03/098895
- WO-A1-2011/013303
- US-A1- 2007 201 699
- US-A1- 2010 077 390

## Description

### Introduction

The present disclosure generally relates to a method and a device for checking authenticity of an application to be executed in relation to the multimedia content such as a HbbTV (Hybrid Broadcast Broadband Television) related application. The device receives a multimedia stream transporting multimedia content data and data forming of at least one application.

### Technical background

According to a definition in HbbTV (Hybrid Broadcast Broadband TV, a multimedia receiver may be connected to a unidirectional broadcasting network and a bidirectional broadband network in parallel. The broadcasting network may be a DVB (Digital Video Broadcasting) network, for example, DVB-T (digital video broadcasting-terrestrial system), DVB-S (digital video broadcasting-satellite system), or DVB-C (digital video broadcasting-cable system). Through the broadcasting network, the multimedia receiver may receive standard broadcast multimedia content including linear audio / video content, application data, and application-related signaling data. In addition, the multimedia receiver may also be connected to a bidirectional broadband network as for example high-speed Internet, that is provided with a return channel, so that the multimedia receiver may also receive video and audio including video on demand VOD, application data, and the like. The application data refers to various applications, for example, a video advertisement, a game, an on-line textual and graphical introduction, etc.

A multimedia receiver may be defined as a television set, a set-top-box, a smartphone, a fixed or portable personal computer, a tablet, or any other device configured to receive, process and render multimedia content.

Hybrid Broadcast Broadband TV is both an industry standard (ETSI TS 102 796) and promotional initiative for hybrid digital TV to harmonize the broadcast, IPTV, and broadband delivery of entertainment to the end consumer through connected multimedia receivers. The HbbTV consortium, regrouping digital broadcasting and Internet industry companies, is establishing a standard for the delivery of broadcast TV and broadband TV to the home, through a single user interface, creating an open platform as an alternative to proprietary technologies. Products and services using the HbbTV standard can operate over different broadcasting technologies, such as satellite, cable, or terrestrial networks.

Security problems may rise by the fact that the multimedia receiver connects to the broadcast domain which has no authentication or protection infrastructure. Such a configuration may be vulnerable to attacks performed through the multimedia receiver. For example, an attack may consist of overwriting an operator broadcast signal by a stronger broadcast signal which includes a malicious HbbTV application together with the normal audio and video streams. In particular, the attack works rather well over digital video broadcasting-terrestrial (DVB-T) signals because it is quite easy to have a malicious modified broadcast signal stronger than the original signal transmitted by an emitter tower. This will result in large scale and untraceable attack affecting any connected television set or smart television located in a wide area. Known attacks can be of different types: Denial of services, unauthenticated or authenticated request forgery, intranet request forgery, fishing engineering, etc. Therefore, there is a need for HbbTV systems to fight against this threat by defining some authentication mechanism to be included in multimedia receivers or associated devices as well as in future version of the HbbTV standard.

US 2007/201699 A1 (KASUYA TAKUYA [JP]) 30 August 2007 (2007-08-30) discloses a broadcast receiver and a broadcast receiving method including an authentication unit for executing secure software. When a broadcasting station transmits an application including an authentication key enabling use of a program recommendation engine together with a program, a broadcast receiver identifies the application including the authentication key. When the application including the authentication key is received, the authentication key is extracted. When a CableCard is inserted, an individual number included in the CableCard is extracted. Authentication is performed using the authentication key and individual number, and the program recommendation engine is executed.

WO 2011/013303 A1 (PANASONIC CORP [JP]; KAGIYAMA TAKASHI; HATA KOICHI) 3 February 2011 (2011-02-03) discloses a received-data authentication method and a digital broadcaster receiver. The method allows the simplification of the authentication processing in a digital broadcast receiver for verifying the trustworthiness of an application requiring authentication and thereby reduces the delay in displaying the application.

### Brief description of the drawings

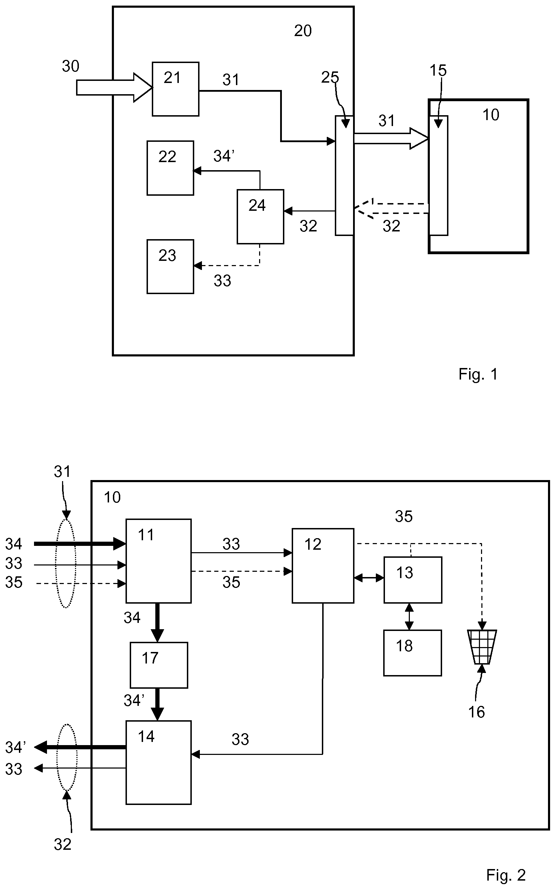

Figure 1 shows a block schematic of a multimedia receiver associated with a conditional access device. The multimedia receiver receives a multimedia stream comprising multimedia content and application data. The conditional access module checks authenticity of the application data before execution of the application by the multimedia receiver.
Figure 2 shows a block schematic of the conditional access module of the embodiment represented by figure 1 configured to check authenticity of application data received within a multimedia stream. The conditional access module outputs a checked multimedia stream comprising multimedia content and checked application data for execution of the application by the multimedia receiver.

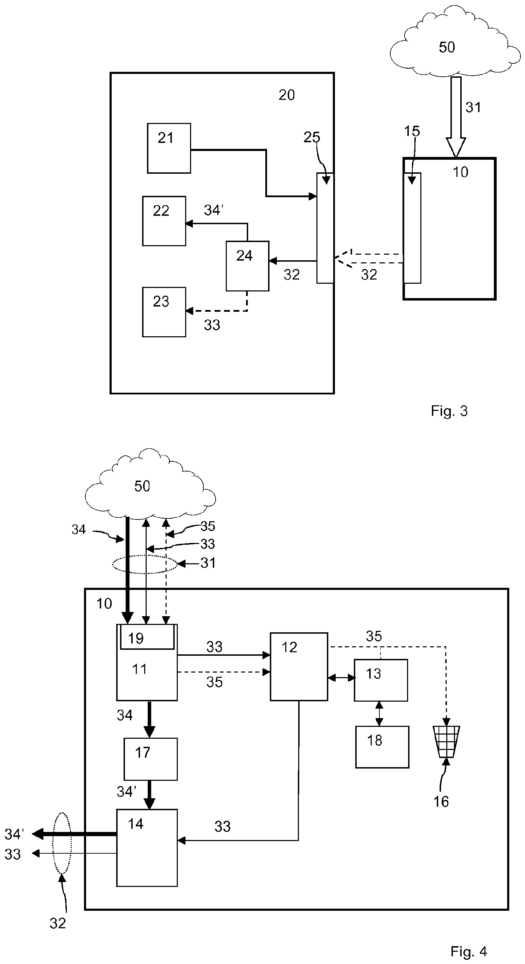

Figure 3 shows a block schematic of an embodiment where the conditional access device receives a multimedia stream comprising multimedia content and application data from an external server of a cloud. The conditional access module checks on-line authenticity of the server before execution of the application by the multimedia receiver.
Figure 4 shows a block schematic of the conditional access module of the embodiment represented by figure 3 configured to check authenticity of the server and integrity of application data received within a multimedia stream. The conditional access module outputs a checked multimedia stream comprising multimedia content and checked application data for execution of the application by the multimedia receiver.

### Detailed description

Examples of multimedia receivers according to embodiments of the present disclosure include but are not limited to: a television set, a set-top-box, a smartphone, a fixed or portable personal computer, a tablet, or any other device configured to receive, process and render multimedia content.

A system in which an embodiment of the present disclosure may be deployed includes a multimedia receiver and a device in form of a peripheral module such as a conditional access module (CAM), preferably removably connectable to the multimedia receiver. Conditional access modules may be in form of a PCMCIA (Personal Computer Memory Card International Association) module, connectable via a communication interface such as a "common interface (CI)" or a dongle connectable to a communication interface such as a universal serial bus interface (USB). The multimedia receiver is configured to receive one or more transport streams (TS) comprising multimedia content for example via satellite transmission, terrestrial broadcast transmission, cable transmission, or via a wired or wireless network performing streaming using for example IP (Internet Protocol) multicast or unicast techniques. This reception can be performed via a unidirectional link or a bidirectional link. The multimedia receiver is further configured to send the transport stream to the conditional access module via the communication interface between the multimedia receiver and the conditional access module in order to allow the conditional access module to process the multimedia content. The conditional access module performs decryption of the received multimedia content according to access rights purchased by a user of the multimedia receiver.

The conditional access module may also be configured to receive multimedia content streams, preferably via a wireless bidirectional communication link to a network as for example a WiFi link to Internet. In this case, the multimedia content may be received through a WiFi input separated from the communication interface of the conditional access module and forwarded to the multimedia receiver via the communication interface. A conditional access module having a WiFi input is usually called WiFi-CAM.

The present disclosure relates to a method for checking authenticity of an application by a conditional access module connectable to a multimedia receiver according to claim 1.

The conditional access module receives a multimedia stream transporting multimedia content and application data forming at least one application to be executed in relation to the multimedia content such as a HbbTV application. The at least one application may be configured for example to enhance the multimedia content. At reception of the multimedia stream by the conditional access module, the application data is separated from the multimedia stream by an input filter included in the conditional access module. The application data comprise a current authentication code. The input filter forwards the application data with the current authentication code to a quarantine memory associated with an application checker included in the conditional access module. The application checker verifies the current authentication code by using a reference authentication code previously acquired by or built-in the conditional access module during an initialization phase. Upon successful verification of the authentication code, the application data is retrieved from the quarantine memory and merged by a merging module with the multimedia content previously separated by the input filter. The merging module then outputs a resulting checked multimedia stream intended to be processed by the multimedia receiver. The at least one application which authenticity has been verified can be executed by the multimedia receiver for enhancing the multimedia content.

When the verification fails as for example when the current authentication code does not match with the reference authentication code, the application is removed from the quarantine memory and forwarded to a trash bin associated with the application checker. When an application is identified as having previously been unsuccessfully verified is received again by the conditional access module, the application may systematically send to the trash bin without verification of the authentication code.

In case of application update when a new version of an application is detected by the conditional access module, the application authenticity checking may be redone by storing the new version in the quarantine memory for verification.

The present disclosure further relates to a conditional access module configured to check authenticity of an application according to claim 8.

The conditional access module is configured to be connectable to a multimedia receiver and to receive a multimedia stream transporting multimedia content data and application data forming at least one application. According to one particular embodiment, the at least one application is configured to enhance the multimedia content.

The conditional access module according to the present disclosure comprises hardware and software modules including at least an input filter, an application checker and a merging module.

The input filter is configured to separate the application data from the multimedia stream. The application data comprise a current authentication code. The application checker is configured to receive from the input filter the application data with the current authentication code, to forward the application data with the current authentication code to a quarantine memory and to verify the current authentication code by using a reference authentication code previously acquired by or built-in the conditional access module during an initialization phase. The merging module is configured to retrieve the application data from the quarantine memory, to merge, upon successful verification, the application data with the multimedia content data separated by the input filter. The merging module obtains and outputs a resulting checked multimedia stream intended to be processed by the multimedia receiver, which is configured to execute the at least one application.

The at least one application received by the conditional access module relates for example to at least one HbbTV application associated with one or more multimedia contents received by the multimedia receiver from a communication link. The communication link may include a unidirectional link sometimes called broadcast link or a broadband network link using Internet Protocol (IP) for example. The application may include electronic program guides (EPG) configured to present the received multimedia content in a window and allow access content descriptions taken from information tables included in the received multimedia stream. Applications related to HbbTV may further include services such as enhanced Teletext, catch-up services, video-on-demand (VOD), interactive advertising, personalization, voting, games, social networking, and other multimedia applications.

In Hybrid broadcast / broadband environments signaling and carriage of interactive applications and services may comply with ETSI standards TS 102 809. Different types of applications may be handled by the multimedia receiver as for example:
Applications bound to exactly one service which are started when that service is selected and stopped when that service is de-selected.

Applications bound to more than one service which are started when any such service is selected, stopped when that service is de-selected, even if the de-selection is part of changing to a new service to which the application is also bound.

Applications which persist across service changes are applications bound to more than one service that are started when any service to which they are bound is selected, run without interruption while any service to which they are bound remains selected and stopped when no longer bound to any currently selected service.

Applications bound to a content item that is part of a service (for example an individual program or adverts) will be started when that content item starts (if the service is selected at that time) and terminated when the content item finishes (if the service remains selected at that time).

Applications bound to a content on demand item will either be handled identically to applications bound to parts of a service (including the possibility for dynamic changes during the content on demand item) or will be valid for the entire duration of the content item.

Applications which are valid while the multimedia receiver is connected to a network operator or service platform provider.

In order to be identified by and operably adapted to the multimedia receiver, application data may comprise a number of metadata associated with them, as for example:
Type: Identifies the platform needed to run or present the application. When an application is identified by the type as not supported by a particular multimedia receiver, the input filter of the conditional access module may eliminate this application before any further checking operations.
"Identifier": Identifies the application. Each application has its own identifier.
"Control code": Defines the lifecycle state of the application. The control code allows the broadcaster to signal to the multimedia receiver what to do with the application with regard to its lifecycle. If the multimedia receiver receives a code that it does not recognize, the application shall continue in its current state. Control codes may be defined as follow:
   "Autostart": The application shall be started when the service is selected, unless the application is already running.
   "Present": The application is allowed to run while the service is selected, however it shall not start automatically when the service becomes selected.
   "Destroy": The application shall be stopped but may be permitted the opportunity to close down gracefully. Attempts to start the application shall fail.
   "Kill": The application shall be stopped as soon as possible. Attempts to start the application shall fail.
   "Prefetch": Application files should be cached by the receiver, if possible. The application shall not be started and attempts to start, it shall fail.
   "Remote": This identifies an application that is not available on the current transport stream and hence only available after tuning to a new transport stream or if cached and signaled as launchable completely from cache.
   "Disabled": The application shall not be started and attempts to start, it shall fail.
   "Playback Autostart": The application shall not be run, neither directly from broadcast nor when in time shift mode. When a recording is being played back from storage, the application shall be presented as if it was in autostart mode.
   "Profile": Defines the minimum profile of multimedia receiver needed for this application.
"Visibility": Identifies whether the application is visible to the user or to other applications via an application listing API (Application Programming Interface). Visibility may be defined as follow:
   "Not visible all" This application shall not be visible either to applications via an application listing API or to users via the navigator with the exception of any error reporting or logging facility, etc.
   "Not visible users" This application shall not be visible to users but shall be visible to applications via an application listing API.
   "Visible all" This application can be visible to users and shall be visible to applications via an application listing API.
"Priority": Defines the priority of the application relative to other signaled applications. The application priority identifies a relative priority between the applications signaled in a service where there is more than one application with the same application identification in a service; this priority may be used to determine which application is started. When there are insufficient resources to continue running a set of applications, this priority may be used to determine which applications to stop or pause. If two applications have the same application identification and the same priority, the multimedia receiver may make an implementation-dependent choice on which to start.
"Icons": Identifies the location of icons for this application. One or more icons may be associated with an application.
"Graphics constraints": Identifies any constraints on this application with respect to changes in graphics configuration or presented video. Applications may be constrained in the graphics resolutions they support, or in their ability to handle changes in the graphics or video configuration.
"Application usage": Identifies that the application provides a specific, well-known, service; for example Teletext, EPG (Electronic Program Guide) or chat. The multimedia receiver may include a shortcut to start these services, for example a specific key on a remote control. The multimedia receiver may also include a native user interface offering access to these services.
"Storage information": Defines whether an application should be stored, and which application files should be stored.

The application data forming an application are signaled in the multimedia transport stream by a Program Map Table (PMT) with an application signaling descriptor to identify and locate the stream transporting an Application Information Table (AIT) and the stream transporting the application data. The Application Information Table comprises at least an application descriptor and an application name descriptor.

HbbTV applications are only allowed to run in the context of a DVB service as an overlay on top of the service or using the scaled television image on top of full screen HTML pages for example. Such a relation is defined by the individual broadcaster by doing specific signaling in the respective broadcast services. HbbTV standards defines a "lifecycle" for HbbTV application defined as how applications are started on DVB services, how one application can start another and what the behavior is when the TV program is changed.

According to an embodiment, MPEG (Moving Picture Experts Group) systems define the Program specific information (PSI), a basic signaling mechanism within the MPEG2-Transport stream (MPEG2-TS) indicating on which elementary streams of the MPEG2-TS all the video and audio streams can be found and to which services they belong. This mechanism is defined by the DVB standards. The Application Information Table (AIT) is linked in the Program Map Table (PMT) like an additional stream associated with a service. In the PMT the minimum required is an additional elementary stream entry plus the application signaling descriptor. This application signaling descriptor specifies the link to the AIT which then provides all relevant information about the application itself as for example an URL (Uniform Resource Locator) as well as the information to control the "lifecycle". So the signaling in the PMT is very lightweight and can be kept static even if application parameters like URL or status change.

According to an embodiment illustrated by figure 1 a multimedia receiver 20 as for example a television set, a set top box, a smartphone, a fixed or portable personal computer, a tablet or the like receives an access-controlled multimedia stream 30. The access-controlled multimedia stream 30 may be transmitted by a satellite, a terrestrial emitter, through a cable via a communication link. The multimedia receiver 20 may also receive the access-controlled multimedia stream 30 via other communication links such as over a broadband network using for example Internet Protocol (IP).

According to an exemplary embodiment, the multimedia receiver 20 comprises a PCMCIA slot which includes electrical connections associated with an interface 25 and a physical space for a plug-in a conditional access module 10, both according to the PCMCIA standard. For example a CI+ CAM (Common Interface Conditional Access Module), referred to as a CAM, is a PCMCIA module which can be plugged into the PCMCIA slot. When the CAM module is fully plugged into the slot, electrical connections are made between connectors on the CAM module and cooperating connectors within the slot. It has to be noted that although the preferred embodiments are described with respect to a CAM module, other types of removable conditional access modules (CAM) are applicable to the present disclosure. For example, conditional access modules provided with a Universal Serial Bus (USB) or the like may be also envisaged.

The CAM module may be a card less module or may have a slot into which a smart card may be inserted. The smart card being removable carries information defining a current user of the multimedia receiver in a tamper-proof, secure and non-volatile form. When the smart card is fully inserted in the slot of the CAM module, a data connection is formed between the smart card and the CAM module, either by using cooperating electrical connectors on the smart card and within the slot, or by using a known contactless connection technique in which data is transferred wirelessly over a very short range, e.g. NFC (Near Field Communication).

Known conditional access systems provide techniques by which a user can be denied or allowed access to a multimedia content stream. Access is provided only to users with valid payment accounts. In other words, a user is provided with a smart card identifying the user in a tamper-free way, and the system is set up so that only users with valid smart cards are able to obtain access to the access-controlled multimedia content. The access control is provided by the use of scrambling and encryption. The multimedia content data is scrambled with a control word, which is changed frequently. The control words are transmitted to the CAM module associated with the multimedia receiver in an encrypted form as an entitlement control message (ECM). The CAM module decrypts the control word to allow descrambling the access-controlled multimedia content only when it is authorized to do so by receipt of an entitlement management message (EMM). The EMM messages are specific to each user or group of users. The CAM module confirms access rights provided by the EMM message by comparing the user identification contained in the EMM message with user information stored in the smart card. The EMM messages are usually sent less frequently than the ECM messages carrying the control words.

As mentioned above, the CAM module may be of an offline type or an online type. The offline CAM module has no capabilities for a wireless link with a communication network; it receives multimedia streams to be processed from the multimedia receiver only via the connection interface between the multimedia receiver and the CAM module. The online CAM module is provided with an appropriate interface for a wireless link to a communication network. The wireless link may use technologies as for example Wi-Fi (Wireless Fidelity) or a public mobile network that uses for example 3G, 4G, LTE (Long Term Evolution) or other type of mobile communications technology requiring a mobile communication service provider. The online CAM module may receive the multimedia stream to be processed via the wireless communication network. Once processed by the CAM module, the multimedia content data and application data are forwarded to the multimedia receiver via the connection interface between the multimedia receiver and the CAM module.

### Offline CAM module

The multimedia receiver 20 comprises a tuner / demodulator 21, a demultiplexer 24, an audio / video decoder 22 and an engine 23 used for executing applications on multimedia content such as the HbbTV applications. The multimedia receiver 20 is linked with the offline CAM module 20 through the interface 25 corresponding for example to the common interface 15 of the CAM module 10.

Depending on the type of input access-controlled multimedia stream 30, the tuner / demodulator 21 of the multimedia receiver 20 outputs a multimedia content stream 31 which is forwarded to the CAM module 10 via the multimedia receiver's interface 25 and the interface 15 of the CAM module 10. The multimedia content stream 31 comprises scrambled multimedia content data 34 with ECM messages, and EMM messages and application data 33 to be processed by the CAM module 10 which outputs a processed multimedia content stream 32. The demultiplexer 24 of the multimedia receiver 20 receives the processed multimedia content stream 32, selects and demultiplexes descrambled multimedia content data 34' and the application data 33 from the processed multimedia content stream 32.

A descrambler module within the CAM module descrambles the scrambled multimedia content data 34 by using the ECM and EMM messages of the multimedia content stream 31. The descrambled multimedia content data 34' is returned to the multimedia receiver 20 where it is demultiplexed by the demultiplexer 24 in order to be decoded by the audio / video decoder 22 for rendering. The demultiplexer 24 further demultiplexes the application data 33 returned by the CAM module together with the descrambled multimedia content data 34'. Once demultiplexed, the application data 33 are regrouped for installation as an application into the multimedia receiver 20. The engine 23 then executes the installed application on the descrambled multimedia content 34' decoded by the audio / video decoder 22. Finally, the decoded multimedia content may be rendered for example on a display associated with the multimedia receiver 20.

The CAM module 10 represented by the block schematic of figure 2 comprises an input filter 11, a quarantine memory 12, a non-volatile memory 18, and a trash bin 16 associated with an application checker 13, a descrambler 17 and a merging module 14.

The multimedia content stream 31 forwarded by the multimedia receiver 20 enters into the input filter 11. According to the shown embodiment, the multimedia content stream 31 comprises scrambled multimedia content 34 in form of scrambled audio and video packets for example, and application data 33. The input filter 11 is configured to separate the application data 33 from the multimedia content stream 31, the scrambled multimedia content data 34 being directed to the descrambler 17. The descrambler 17 outputs descrambled multimedia content 34' which is forwarded to the merging module 14.

The input filter 11 may detect PMT tables in the multimedia content stream 31 for analyzing their content, in particular presence of an application signaling descriptor. The application signaling descriptor allows identifying and locating in the multimedia content stream 31 Application Information Tables (AIT) and the applications data. In the example, the AIT tables refer to an application formed by the application data 33, which may be forwarded and stored into the quarantine memory 12. The application data 33 may comprise an authentication code formed, for example, by a signature associated with the respective application.

The signature may be determined by the provider of the application, for example, by applying an algorithm or signing function to the application data 33. Before creating the signature, the application data 33 may be hashed by applying a unidirectional collision resistant hash algorithm to obtain an application digest. A signature algorithm may then be applied to the application digest by using, for example, a public key specific to the application provider for encrypting the application digest in order to generate the signature.

A hash algorithm is a function that converts an input data string into an output data string of fixed length. The output data string is generally much smaller than the input data string. Hash algorithms are designed to be collision resistant, meaning that there is a very low probability that the same string would be created for different data. Two of the most common hash algorithms are the MD5 (Message-Digest algorithm 5) and the SHA-1 (Secure Hash Algorithm). MD5 Message Digest checksums are commonly used to validate data integrity when data files are transferred or stored.

Once the application data 33 comprising the signature is stored in the quarantine memory 12, the application checker 13 retrieves the signature of the concerned application for verification. The application checker 13 is further associated with the non-volatile memory 18 containing at least one reference authentication code previously acquired from a server of the application provider or from an application certification authority. The reference authentication code may also be stored during an initialization phase at manufacturing of the CAM module 10.

The at least one reference authentication code, also called certificate, may comprise at least one decryption key or codes necessary for building one or more decryption keys by using a pre-programmed algorithm. The certificate may also refer to algorithms used for decrypting application signatures. The keys and algorithm generally depend on the application providers having each their own method to process authentication codes.

The verification process allows checking that the received application has not been modified by a third outside party and that the signature of the application was really created by a trusted application provider. The verification process may comprise decryption of the signature for example with a key determined by the reference authentication code retrieved from the non-volatile memory 18 associated with the application checker 13 by applying an appropriate decryption algorithm. The decrypted signature corresponds to a received application data digest. The verification process further comprises computing by the application checker 13 a digest of the application with for example a hash algorithm for obtaining a computed application digest and comparing the computed application digest with the received application digest. The signature of the application is considered as valid if and only if the comparison gives a match when the computed application digest and the received application digest are identical.

The type of the hash algorithm to use may be indicated by a reference associated with the authentication code or certificate.

In a contrary case, when the comparison fails by showing a difference between the computed application digest and the received application digest, the received signature is considered as invalid by the application checker 13. The application data 33 stored in the quarantine memory 12 is marked as inoperative. This comparison failure may be signaled, for example, in form of an error message displayed on a screen associated with the multimedia receiver 20. In this case, the application data may be forwarded by the application checker 13 to a trash bin 16 for definitive deletion. According to an embodiment, application data marked as inoperative in the quarantine memory 12 may be stored for example during a pre-defined time before deletion or deleted after a restart of the multimedia receiver 20 respectively the conditional access module 10.

The trash bin 16 as illustrated by figure 2 symbolizes a particular marking for invalid application data in the quarantine memory 12 in order to be erased automatically by the application checker 13 at predefined conditions. For example, deletion may occur after a predefined time period, at device restart or at storing of further application data which may overwrite the invalid application data. The marked application data may also be erased manually by a user following the error message display.

Figure 2 further shows the way followed by fake application data 35 which enter the conditional access module 10 in the input multimedia content stream 31 (dashed arrows). The input filter 11 forwards the fake application data 35 into the quarantine memory 12 for verification by the application checker 13. The verification of the signature being unsuccessful, the fake application data 35 is marked as such or, in other words, sent to the trash bin 16 for definitive deletion. The signature received from the fake application data 35 may be invalidated when the application comes from an untrusted provider or when the application data has been modified by a third party. For example, the fake application data 35 may be infected by viruses, worms or Trojans leading to a digests comparison mismatch during verification of the signature.

When the signature received within the application data 33 is considered as valid by the application checker 13, the checked application data 33 is retrieved from the quarantine memory 12 and forwarded to the merging module 14. The descrambled multimedia content 34' produced by the descrambler 17 and the checked application data 33 are then merged by the merging module 14 to form the processed multimedia content stream 32, which is forwarded to the multimedia receiver 20 for further processing as described above.

### Online CAM module

According to a further embodiment of the present disclosure, the CAM module 10 may be provided with a transceiver module having an appropriate interface for a bidirectional wireless link to a broadband communication network. The wireless link may use technologies as for example Wi-Fi or a public mobile network using for example 3G, 4G, LTE (Long Term Evolution) or other type of mobile communications technology.

In general the online CAM module may connect to Internet or more generally to a cloud 50 via the broadband network. A cloud as used herein may refer to a network of remote servers hosted on the Internet and used to store, manage, access to software and other resources, and process data in place of local servers or personal computers. The online CAM module may sometimes be designated as a WiFi CAM.

When an online CAM module 10 is associated with the multimedia receiver 20, two cases may occur:
a) Only the application may be provided by the cloud 50 via the broadband network to the online CAM module 10 while the multimedia content may be provided via the unidirectional link such as a satellite, cable or terrestrial emitter to the tuner / demodulator 21 of the multimedia receiver 20 as in the preceding embodiment using an offline CAM module.
b) Both the application and the multimedia content may be provided to the online CAM module 10 by the cloud 50 via the broadband network using an IP protocol, as illustrated by figures 3 and 4.

Figure 3 shows an example where the multimedia content stream 31 provided by the cloud 50 enters into the online CAM module 10 via an appropriate WiFi connection interface associated with the transceiver module 19. The multimedia content stream 31 comprises scrambled multimedia content data 34 with ECM messages and EMM messages and application data 33 to be processed by the online CAM module 10 which outputs a processed multimedia content stream 32. This processed multimedia stream 32 comprising the descrambled multimedia content 34' and the application data 33 enters into the multimedia receiver 20 for further processing as described above in the context of the offline CAM embodiment.

The multimedia content stream 31 provided by the cloud 50 enters into the input filter 11 of the CAM module via the transceiver module 19. According to the embodiment illustrated by figure 4, the multimedia content stream 31 comprises scrambled multimedia content data 34 in form of scrambled audio and video packets for example, and application data 33. Since the wireless link between the cloud 50 and the CAM module 10 is bidirectional, the input filter 11 may check authenticity of the server providing the application data 33. The input filter 11 may identify and locate in the multimedia content stream 31 an Application Information Table (AIT) related to the application data 33. This AIT table contains an URL (Uniform Resource Locator) usually called a web address referring to a web resource specifying a location in the cloud 50 of a server capable to provide a requested application.

The input filter 11 extracts the URL from the table for using it to check authenticity of the server which is hosting for example an HbbTV application. For checking server authenticity, the input filter 11 may transmit to the server designated by the URL a request for identification data or a certificate specific to the server. The server may return, in response to the request, server identification data which may be stored temporally in the quarantine memory 12 for example. The application checker 13 may then compare the server identification data with reference data such as a reference certificate. As in the offline CAM module embodiment, the non-volatile memory 18 associated with the application checker 13 may further contain reference data or reference certificates allowing identifying trusted application servers.

If the comparison between the identification data returned by the server and reference data retrieved from the non-volatile memory 18 gives a match, authenticity of server is recognized by the CAM module so that application data 33 can be downloaded without risk.

Once downloaded from a server recognized as authentic, the application data may be forwarded to the quarantine memory 12 for integrity verification by using the authentication code or signature as in the offline CAM embodiment. In fact, application data even provided by a trusted server can be modified or infected by viruses for example, so that integrity verification is not useless.

Otherwise, when the comparison fails, the server is considered as untrusted so that no application data is downloaded and therefore the URL referring to the untrusted server is rejected by the input filter 11, respectively deleted from the AIT table. In this case, no application data is forwarded to the multimedia receiver 20, only the scrambled multimedia content data 34 will be processed by the descrambler 17 and forwarded to the multimedia receiver 20 via the merging module 14.

As in the offline CAM module embodiment, fake applications 35 which integrity verification has been unsuccessful are directed to the trash bin 16 associated with the application checker 13 to be definitively deleted.

According to a further embodiment, the multimedia receiver 20 may receive the multimedia stream comprising the scrambled multimedia content data 34 from a satellite, cable or terrestrial emitter via the unidirectional link and application data may be available from an application server via the broadband network using IP protocol for example. The multimedia stream may contain application signaling data as for example AIT tables indicating an address or an URL of the application server on the broadband network able to provide application data. In this case, the application data 33 may be directly downloaded by the multimedia receiver 20 without passing through the CAM module 10. The AIT table may be retained by the CAM module and the application data downloading temporary blocked until verification of the server authenticity has been performed by the CAM module 10.

The input filter 11 of the CAM module 10, receives only the AIT tables as part of the multimedia stream transmitted by the multimedia receiver for checking authenticity of the server hosting the application. As in the preceding embodiment, the input filter 11 transmits to the server designated by the URL a request for identification and authentication data. The server may return, in response to the request, its identification and authentication data as for example SSL (Secure Sockets Layer) based authentication data which is checked by the CAM module 10. The AIT table may be stored temporally in the quarantine memory 12 for example until completion of the authentication. The application checker 13 may then compare the server identification data with reference data stored in the non-volatile memory 18 associated with the application checker 13. When the comparison gives a match, authenticity of the server is recognized by the CAM module 10 which releases from the quarantine memory 12 the AIT table including the checked URL. Upon reception of the checked AIT table with the checked URL, the multimedia receiver 20 initiates the application data downloading from the server by using the checked URL. The downloaded application data may be stored in a memory of the receiver in order to install the application in the multimedia receiver 20. The application may then be executed on the multimedia content by the engine 23.

According to an exemplary configuration, when the application signaling data (AIT table) is received with the application data within the multimedia stream transmitted by the unidirectional link, the application data are forwarded to the CAM module. The application checker 13 verifies the signature of the application included in the application data.

When the application data are made available on a server via the broadband network and the application signaling data (AIT table) is received within the multimedia stream, only the application signaling data, as part of the whole multimedia stream, is forwarded to the CAM module 10 for checking authenticity of the server hosting the application. The CAM module 10 retains the application signaling data until the successful authentication, by the CAM module 10, of the server. The checked application signaling data releases downloading, by the multimedia receiver 20, the application data 33 from the server.

Although embodiments of the present disclosure have been described with reference to specific example embodiments, it will be evident that various modifications and changes may be made to these embodiments without departing from the broader scope of these embodiments. Accordingly, the specification and drawings are to be regarded in an illustrative rather than a restrictive sense. The accompanying drawings that form a part hereof, show by way of illustration, and not of limitation, specific embodiments in which the subject matter may be practiced. The embodiments illustrated are described in sufficient detail to enable those skilled in the art to practice the teachings disclosed herein. Other embodiments may be utilized and derived there from, such that structural and logical substitutions and changes may be made without departing from the scope of this disclosure. This Detailed Description, therefore, is not to be taken in a limiting sense, and the scope of various embodiments is defined only by the appended claims, along with the full range of equivalents to which such claims are entitled.

Such embodiments of the inventive subject matter may be referred to herein, individually and/or collectively, by the term "disclosure" merely for convenience and without intending to voluntarily limit the scope of this application to any single inventive concept if more than one is in fact disclosed. Thus, although specific embodiments have been illustrated and described herein, it should be appreciated that any arrangement calculated to achieve the same purpose may be substituted for the specific embodiments shown. This disclosure is intended to cover any and all adaptations or variations of various embodiments. Combinations of the above embodiments, and other embodiments not specifically described herein, will be apparent to those of skill in the art upon reviewing the above description.

## Claims

1. A method for checking authenticity of an application by a conditional access module (10) connectable to a multimedia receiver (20), the conditional access module (10) receiving a multimedia stream (31) transporting multimedia content (34) and application data (33) forming at least one application, the at least one application being configured to enhance the multimedia content (34), comprising:
separating, by an input filter (11) included in the conditional access module (10), the application data (33) from the multimedia stream (31), the application data comprising a current authentication code,
forwarding, by the input filter (11), the application data with the current authentication code to a quarantine memory (12) of an application checker (13) included in the conditional access module (10),
verifying, by the application checker (13), the current authentication code by using a reference authentication code previously acquired by or built in the conditional access module (10),
upon successful verification, retrieving from the quarantine memory (12), by a merging module (14), which is part of the conditional access module (10), the application data (33) and
merging the application data (33) with the multimedia content (34) previously separated by the input filter (11), obtaining a checked multimedia stream (32), outputting the checked multimedia stream (32) for execution of the at least one application enhancing the multimedia content (34).

2. The method according to claim 1, **characterized in that** if the verification of the current authentication code fails, the application data are removed from the quarantine memory and forwarded to a trash bin (16) associated with the application checker for definitive deletion.

3. The method according to claim 1 or 2, **characterized in that** the current authentication code comprises a signature obtained by encrypting a digest of the application data with a key specific to an application provider, the reference authentication code comprising a reference key corresponding to the key specific to the application provider and information related to a hash algorithm to be used for determining the digest of the application data.

4. The method according to claim 3, **characterized in that** the application checker verifies the signature by decrypting the digest of the application data with the reference key, comparing the decrypted digest with a calculated digest determined by applying the hash algorithm on the application data, and when the comparison gives a match between the decrypted digest and the calculated digest, merging the application data with the multimedia content separated by the input filter.

5. The method according to any of the preceding claims 1 to 4, wherein the conditional access module is associated with the multimedia receiver, **characterized in that** the multimedia stream transporting multimedia content and application data is received by the multimedia receiver via a unidirectional communication link, the multimedia receiver forwarding the multimedia content and the application data to the input filter of the conditional access module.

6. The method according to any of the preceding claims 1 to 4, **characterized in that** the conditional access module comprises a transceiver module configured to communicate with a remote server via a wireless bidirectional communication link. the multimedia stream transporting multimedia content and application data being received by the transceiver module from the remote server and forwarded to the input filter of the conditional access module.

7. The method according to any of the preceding claims 1 to 6 **characterized in that** it further comprises transmitting, by the input filter, the multimedia content separated from the multimedia stream to a descrambler, the descrambler forwarding descrambled multimedia content to the merging module.

8. A conditional access module (10) configured to check authenticity of an application, the conditional access module being configured to be connectable to a multimedia receiver (20) and to receive a multimedia stream (31) transporting multimedia content (34) and application data (33) forming at least one application, the at least one application being configured to enhance the multimedia content (34), comprising:
an input filter (11) configured to separate the application data from the multimedia stream, the application data comprising a current authentication code,
an application checker (13) configured to receive from the input filter the application data with the current authentication code, to forward the application data with the current authentication code to a quarantine memory (12) and to verify the current authentication code by using a reference authentication code previously acquired by or built in the conditional access module,
a merging module (14) configured to retrieve the application data from the quarantine memory, to merge, upon successful verification, the application data with the multimedia content previously separated by the input filter, to obtain a checked multimedia stream (32), and to output the checked multimedia stream to the multimedia receiver for execution of the at least one application enhancing the multimedia content.

9. The conditional access module according to claim 8, **characterized in that** the application checker is configured to remove the application data from the quarantine memory if the verification of the current authentication code fails, and to forward the application data to a trash bin associated with the application checker for definitive deletion.

10. The conditional access module according to claim 8 or 9, **characterized in that** the current authentication code comprises a signature formed by a digest of the application data encrypted with a key specific to an application provider, the reference authentication code comprising a reference key corresponding to the key specific to the application provider and information related to a hash algorithm to be used for determining the digest of the application data.

11. The conditional access module according to claim 10, **characterized in that** the application checker is further configured to verify the signature by decrypting the digest of the application data with the reference key, compare the decrypted digest with a calculated digest determined by applying the hash algorithm on the application data, and to transmit the application data to the merging module when the comparison gives a match between the decrypted digest and the calculated digest.

12. The conditional access module according to any of the preceding claims 8 to 11, **characterized in that** the input filter is configured to receive the multimedia stream transporting multimedia content and application data from the multimedia receiver via a unidirectional communication link, the multimedia receiver being configured to forward the multimedia content and the application data to the input filter of the conditional access module.

13. The conditional access module according to any of the preceding claims 8 to 11, **characterized in that** it further comprises a transceiver module configured to communicate with a remote server via a bidirectional wireless communication link, the transceiver module being configured to receive the multimedia stream transporting multimedia content and application data from the remote server and to forward the multimedia stream to the input filter.

14. The conditional access module according to 13 **characterized in that** the transceiver module is configured to communicate with the remote server via a bidirectional wireless communication link using Wi-Fi based technology or via a public mobile communication network.

15. The conditional access module according to any of the preceding claims 8 to 14 **characterized in that** it further comprises a descrambler configured to descramble the multimedia content separated by the input filter from the multimedia stream and to forward the descrambled multimedia content to the merging module.

## Patentansprüche

1. Verfahren zur Überprüfung der Authentizität einer Anwendung durch ein Zugangsberechtigungsmodul (10), das mit einem Multimedia-Empfänger (20) verbunden werden kann, wobei das Zugangsberechtigungsmodul (10) einen Multimedia-Stream (31) empfängt, der Multimedia-Inhalt (34) und Anwendungsdaten (33) transportiert, die mindestens eine Anwendung bilden, wobei die mindestens eine Anwendung konfiguriert ist, um den Multimedia-Inhalt (34) zu verbessern, Folgendes umfassend:
Trennen durch einen Eingangsfilter (11), der in dem Zugangsberechtigungsmodul (10) beinhaltet ist, der Anwendungsdaten (33) von dem Multimedia-Stream (31), wobei die Anwendungsdaten einen aktuellen Authentifizierungscode umfassen,
Weiterleiten durch den Eingangsfilter (11) der Anwendungsdaten mit dem aktuellen Authentifizierungscode in einen Quarantänespeicher (12) eines Anwendungsprüfers (13), der in dem Zugangsberechtigungsmodul (10) beinhaltet ist,
Überprüfen durch den Anwendungsprüfer (13) des aktuellen Authentifizierungscodes durch Verwenden eines Referenzauthentifizierungscodes, der zuvor in dem Zugangsberechtigungsmodul (10) erworben oder erstellt worden ist,
bei erfolgreicher Überprüfung Wiederherstellen aus dem Quarantänespeicher (12) durch ein Zusammenlegungsmodul (14), welches Teil des Zugangsberechtigungsmoduls (10) ist, der Anwendungsdaten (33), und Zusammenlegen der Anwendungsdaten (33) mit dem zuvor durch den Eingangsfilter (11) getrennten Multimedia-Inhalt (34), Erhalten eines geprüften Multimedia-Streams (32),
Ausgeben des geprüften Multimedia-Streams (32) zum Ausführen der mindestens einen Anwendung, die den Multimedia-Inhalt (34) verbessert.

2. Verfahren nach Anspruch 1, **dadurch gekennzeichnet, dass**, falls die Überprüfung des aktuellen Authentifizierungscodes scheitert, die Anwendungsdaten aus dem Quarantänespeicher entfernt, und in einen Abfalleimer (16), der dem Anwendungsprüfer zugeordnet ist, zur endgültigen Löschung weitergeleitet werden.

3. Verfahren nach Anspruch 1 oder 2, **dadurch gekennzeichnet, dass** der aktuelle Authentifizierungscode eine Signatur umfasst, die durch Verschlüsseln eines Auszugs der Anwendungsdaten mit einem Schlüssel erhalten wird, der speziell für einen Anwendungsanbieter ist, wobei der Referenzauthentifizierungscode einen Referenzschlüssel umfasst, der dem Schlüssel speziell für den Anwendungsanbieter entspricht, und Informationen in Bezug auf einen Hash-Algorithmus, der zum Bestimmen des Auszugs aus den Anwendungsdaten zu verwenden ist.

4. Verfahren nach Anspruch 3, **dadurch gekennzeichnet, dass** der Anwendungsprüfer die Signatur durch Entschlüsseln des Auszugs der Anwendungsdaten mit dem Referenzschlüssel, Vergleichen des entschlüsselten Auszugs mit einem berechneten Auszug, der durch Anwenden des Hash-Algorithmus auf die Anwendungsdaten bestimmt wird, überprüft, und wenn der Vergleich eine Übereinstimmung zwischen dem entschlüsselten Auszug und dem berechneten Auszug ergibt, Zusammenlegen der Anwendungsdaten mit dem durch den Eingangsfilter getrennten Multimedia-Inhalt.

5. Verfahren nach einem der vorstehenden Ansprüche 1 bis 4, wobei das Zugangsberechtigungsmodul dem Multimedia-Empfänger zugeordnet ist, **dadurch gekennzeichnet, dass** der Multimedia-Stream, der Multimedia-Inhalt und Anwendungsdaten transportiert, durch den Multimedia-Empfänger über einen einseitig gerichteten Kommunikationslink empfangen wird, wobei der Multimedia-Empfänger den Multimedia-Inhalt und die Anwendungsdaten an den Eingangsfilter des Zugangsberechtigungsmoduls weiterleitet.

6. Verfahren nach einem der vorstehenden Ansprüche 1 bis 4, **dadurch gekennzeichnet, dass** das Zugangsberechtigungsmodul ein Sender-Empfänger-Modul umfasst, das konfiguriert ist, um über einen drahtlosen zweiseitig gerichteten Kommunikationslink mit einem entfernten Server zu kommunizieren, wobei der Multimedia-Stream, der Multimedia-Inhalt und Anwendungsdaten transportiert, durch das Sender-Empfänger-Modul von dem entfernten Server empfangen wird und an den Eingangsfilter des Zugangsberechtigungsmoduls weitergeleitet wird.

7. Verfahren nach einem der vorstehenden Ansprüche 1 bis 6, **dadurch gekennzeichnet, dass** es weiter Übertragen durch den Eingangsfilter des von dem Multimedia-Stream getrennten Multimedia-Inhalts an einen Entwürfler umfasst, wobei der Entwürfler entwürfelten Multimedia-Inhalt an das Zusammenlegungsmodul weiterleitet.

8. Zugangsberechtigungsmodul (10), das konfiguriert ist, um die Authentizität einer Anwendung zu überprüfen,
wobei das Zugangsberechtigungsmodul konfiguriert ist, um mit einem Multimedia-Empfänger (20) verbunden werden zu können, und einen Multimedia-Stream (31) zu empfangen, der Multimedia-Inhalt (34) und Anwendungsdaten (33) transportiert, die mindestens eine Anwendung bilden, wobei die mindestens eine Anwendung konfiguriert ist, um den Multimedia-Inhalt (34) zu verbessern, Folgendes umfassend:
einen Eingangsfilter (11), der konfiguriert ist, um die Anwendungsdaten von dem Multimedia-Stream zu trennen, wobei die Anwendungsdaten einen aktuellen Authentifizierungscode umfassen,
einen Anwendungsprüfer (13), der konfiguriert ist, um von dem Eingangsfilter die Anwendungsdaten mit dem aktuellen Authentifizierungscode zu empfangen, die Anwendungsdaten mit dem aktuellen Authentifizierungscode in einen Quarantänespeicher (12) weiterzuleiten, und den aktuellen Authentifizierungscode durch Verwenden eines Referenzauthentifizierungscodes, der zuvor in dem Zugangsberechtigungsmodul erworben oder erstellt worden ist, zu überprüfen,
ein Zusammenlegungsmodul (14), das konfiguriert ist, um die Anwendungsdaten aus dem Quarantänespeicher wiederherzustellen, um die Anwendungsdaten bei erfolgreicher Überprüfung mit dem zuvor durch den Eingangsfilter getrennten Multimedia-Inhalt zusammenzulegen, um einen geprüften Multimedia-Stream (32) zu erhalten, und den geprüften Multimedia-Stream zum Ausführen der mindestens einen Anwendung, die den Multimedia-Inhalt verbessert, an den Multimedia-Empfänger auszugeben.

9. Zugangsberechtigungsmodul nach Anspruch 8, **dadurch gekennzeichnet, dass** der Anwendungsprüfer konfiguriert ist, um, falls die Überprüfung des aktuellen Authentifizierungscodes scheitert, die Anwendungsdaten aus dem Quarantänespeicher zu entfernen, und die Anwendungsdaten in einen Abfalleimer, der dem Anwendungsprüfer zugeordnet ist, zur endgültigen Löschung weiterzuleiten.

10. Zugangsberechtigungsmodul nach Anspruch 8 oder 9, **dadurch gekennzeichnet, dass** der aktuelle Authentifizierungscode eine Signatur umfasst, die durch einen Auszug der Anwendungsdaten gebildet wird, der mit einem Schlüssel verschlüsselt wird, der speziell für einen Anwendungsanbieter ist, wobei der Referenzauthentifizierungscode einen Referenzschlüssel, der dem Schlüssel speziell für den Anwendungsanbieter entspricht, und Informationen in Bezug auf einen Hash-Algorithmus umfasst, der zum Bestimmen des Auszugs aus den Anwendungsdaten zu verwenden ist.

11. Zugangsberechtigungsmodul nach Anspruch 10, **dadurch gekennzeichnet, dass** der Anwendungsprüfer weiter konfiguriert ist, um die Signatur durch Entschlüsseln des Auszugs der Anwendungsdaten mit dem Referenzschlüssel zu überprüfen, den entschlüsselten Auszug mit einem berechneten Auszug, der durch Anwenden des Hash-Algorithmus auf die Anwendungsdaten bestimmt wird, zu vergleichen, und wenn der Vergleich eine Übereinstimmung zwischen dem entschlüsselten Auszug und dem berechneten Auszug ergibt, die Anwendungsdaten an das Zusammenlegungsmodul zu übertragen.

12. Zugangsberechtigungsmodul nach einem der vorstehenden Ansprüche 8 bis 11, **dadurch gekennzeichnet, dass** der Eingangsfilter konfiguriert ist, um den Multimedia-Stream, der Multimedia-Inhalt und Anwendungsdaten transportiert, aus dem Multimedia-Empfänger über einen einseitig gerichteten Kommunikationslink zu empfangen, wobei der Multimedia-Empfänger konfiguriert ist, um den Multimedia-Inhalt und die Anwendungsdaten an den Eingangsfilter des Zugangsberechtigungsmoduls weiterzuleiten.

13. Zugangsberechtigungsmodul nach einem der vorstehenden Ansprüche 8 bis 11, **dadurch gekennzeichnet, dass** es weiter ein Sender-Empfänger-Modul umfasst, das konfiguriert ist, um über einen zweiseitig gerichteten drahtlosen Kommunikationslink mit einem entfernten Server zu kommunizieren, wobei das Sender-Empfänger-Modul konfiguriert ist, um den Multimedia-Stream, der Multimedia-Inhalt und Anwendungsdaten transportiert, von dem entfernten Server zu empfangen, und den Multimedia-Stream an den Eingangsfilter weiterzuleiten.

14. Zugangsberechtigungsmodul nach 13, **dadurch gekennzeichnet, dass** das Sender-Empfänger-Modul konfiguriert ist, um über einen zweiseitig gerichteten drahtlosen Kommunikationslink durch Verwenden von Wi-Fibasierter Technik oder über ein öffentliches Mobilfunkkommunikationsnetz mit dem entfernten Server zu kommunizieren.

15. Zugangsberechtigungsmodul nach einem der vorstehenden Ansprüche 8 bis 14, **dadurch gekennzeichnet, dass** es weiter einen Entwürfler umfasst, der konfiguriert ist, um den durch den Eingangsfilter von dem Multimedia-Stream getrennten Multimedia-Inhalt zu entwürfeln, und den entwürfelten Multimedia-Inhalt an das Zusammenlegungsmodul weiterzuleiten.

## Revendications

1. Procédé pour vérifier l'authenticité d'une application par un module d'accès conditionnel (10) connectable à un récepteur multimédia (20), le module d'accès conditionnel (10) recevant un flux multimédia (31) transportant un contenu multimédia (34) et des données d'application (33) formant au moins une application, l'au moins une application étant configurée pour améliorer le contenu multimédia (34), comprenant :
la séparation, par un filtre d'entrée (11) inclus dans le module d'accès conditionnel (10), des données d'application (33) du flux multimédia (31), les données d'application (33) comprenant un code d'authentification actuel,
le transfert, par le filtre d'entrée (11), des données d'application avec le code d'authentification actuel à une mémoire de quarantaine (12) d'un vérificateur d'application (13) inclus dans le module d'accès conditionnel (10),
la vérification, par le vérificateur d'application (13), du code d'authentification actuel en utilisant un code d'authentification de référence acquis précédemment par ou intégré au module d'accès conditionnel (10),
lors d'une vérification réussie, la récupération depuis la mémoire de quarantaine (12), par un module de fusion (14), qui fait partie du module d'accès conditionnel (10), des données d'application (33) et la fusion des données d'application (33) avec le contenu multimédia (34) séparé précédemment par le filtre d'entrée (11), obtenant un flux multimédia vérifié (32),
la sortie du flux multimédia vérifié (32) pour l'exécution de l'au moins une application améliorant le contenu multimédia (34).

2. Procédé selon la revendication 1, **caractérisé en ce que** si la vérification du code d'authentification actuel échoue, les données d'application sont supprimées de la mémoire de quarantaine et transférées à une corbeille (16) associée au vérificateur d'application pour suppression définitive.

3. Procédé selon la revendication 1 ou 2, **caractérisé en ce que** le code d'authentification actuel comprend une signature obtenue en chiffrant un condensé des données d'application avec une clé spécifique à un fournisseur d'application, le code d'authentification de référence comprenant une clé de référence correspondant à la clé spécifique au fournisseur d'application et des informations relatives à un algorithme de hachage à utiliser pour déterminer le condensé des données d'application.

4. Procédé selon la revendication 3, **caractérisé en ce que** le vérificateur d'application vérifie la signature en déchiffrant le condensé des données d'application avec la clé de référence, en comparant le condensé déchiffré avec un condensé calculé déterminé en appliquant l'algorithme de hachage sur les données d'application, et lorsque la comparaison donne une correspondance entre le condensé déchiffré et le condensé calculé, fusionner les données d'application avec le contenu multimédia séparé par le filtre d'entrée.

5. Procédé selon l'une quelconque des revendications 1 à 4 précédentes, dans lequel le module d'accès conditionnel est associé au récepteur multimédia, **caractérisé en ce que** le flux multimédia transportant un contenu multimédia et des données d'application est reçu par le récepteur multimédia via une liaison de communication unidirectionnelle, le récepteur multimédia transférant le contenu multimédia et les données d'application au filtre d'entrée du module d'accès conditionnel.

6. Procédé selon l'une quelconque des revendications 1 à 4 précédentes, **caractérisé en ce que** le module d'accès conditionnel comprend un module émetteur-récepteur configuré pour communiquer avec un serveur distant via une liaison de communication bidirectionnelle sans fil, le flux multimédia transportant un contenu multimédia et des données d'application qui sont reçus par le module émetteur-récepteur en provenance du serveur distant et transférés au filtre d'entrée du module d'accès conditionnel.

7. Procédé selon l'une quelconque des revendications 1 à 6 précédentes, **caractérisé en ce qu'**il comprend en outre la transmission, par le filtre d'entrée, du contenu multimédia séparé du flux multimédia à un désembrouilleur, le désembrouilleur transférant un contenu multimédia désembrouillé au module de fusion.

8. Module d'accès conditionnel (10) configuré pour vérifier l'authenticité d'une application,
le module d'accès conditionnel étant configuré pour être connectable à un récepteur multimédia (20) et pour recevoir un flux multimédia (31) transportant un contenu multimédia (34) et des données d'application (33) formant au moins une application, l'au moins une application étant configurée pour améliorer le contenu multimédia (34), comprenant :
un filtre d'entrée (11) configuré pour séparer les données d'application du flux multimédia, les données d'application comprenant un code d'authentification actuel,
un vérificateur d'application (13) configuré pour recevoir en provenance du filtre d'entrée les données d'application avec le code d'authentification actuel, pour transférer les données d'application avec le code d'authentification actuel à une mémoire de quarantaine (12) et pour vérifier le code d'authentification actuel en utilisant un code d'authentification de référence acquis précédemment par ou intégré au module d'accès conditionnel,
un module de fusion (14) configuré pour récupérer les données d'application depuis la mémoire de quarantaine, pour fusionner, lors d'une vérification réussie, les données d'application avec le contenu multimédia séparé précédemment par le filtre d'entrée, pour obtenir un flux multimédia vérifié (32), et
pour sortir le flux multimédia vers le récepteur multimédia vérifié pour l'exécution de l'au moins une application améliorant le contenu multimédia.

9. Module d'accès conditionnel selon la revendication 8, **caractérisé en ce que** le vérificateur d'application est configuré pour supprimer les données d'application de la mémoire de quarantaine si la vérification du code d'authentification actuel échoue, et pour transférer les données d'application à une corbeille associée au vérificateur d'application pour suppression définitive.

10. Module d'accès conditionnel selon la revendication 8 ou 9, **caractérisé en ce que** le code d'authentification actuel comprend une signature formée d'un condensé des données d'application chiffré avec une clé spécifique à un fournisseur d'application, le code d'authentification de référence comprenant une clé de référence correspondant à la clé spécifique au fournisseur d'application et des informations relatives à un algorithme de hachage à utiliser pour déterminer le condensé des données d'application.

11. Module d'accès conditionnel selon la revendication 10, **caractérisé en ce que** le vérificateur d'application est en outre configuré pour vérifier la signature en déchiffrant le condensé des données d'application avec la clé de référence, pour comparer le condensé déchiffré avec un condensé calculé déterminé en appliquant l'algorithme de hachage sur les données d'application, et pour transmettre les données d'application au module de fusion lorsque la comparaison donne une correspondance entre le condensé déchiffré et le condensé calculé.

12. Module d'accès conditionnel selon l'une quelconque des revendications 8 à 11 précédentes, **caractérisé en ce que** le filtre d'entrée est configuré pour recevoir le flux multimédia transportant un contenu multimédia et des données d'application en provenance du récepteur multimédia via une liaison de communication unidirectionnelle, le récepteur multimédia étant configuré pour transférer le contenu multimédia et les données d'application au filtre d'entrée du module d'accès conditionnel.

13. Module d'accès conditionnel selon l'une quelconque des revendications 8 à 11 précédentes, **caractérisé en ce qu'**il comprend en outre un module émetteur-récepteur configuré pour communiquer avec un serveur distant via une liaison de communication sans fil bidirectionnelle, le module émetteur-récepteur étant configuré pour recevoir le flux multimédia transportant un contenu multimédia et des données d'application en provenance du serveur distant et pour transférer le flux multimédia au filtre d'entrée.

14. Module d'accès conditionnel selon la revendication 13, **caractérisé en ce que** le module émetteur-récepteur est configuré pour communiquer avec le serveur distant via une liaison de communication sans fil bidirectionnelle utilisant une technologie basée sur Wi-Fi ou via un réseau de communication mobile public.

15. Module d'accès conditionnel selon l'une quelconque des revendications 8 à 14 précédentes, **caractérisé en ce qu'**il comprend en outre un désembrouilleur configuré pour désembrouiller le contenu multimédia séparé par le filtre d'entrée du flux multimédia et pour transférer le contenu multimédia désembrouillé au module de fusion.
